# EUROPEAN PATENT SPECIFICATION

(11) **EP 0 842 570 B1**
(45) Date of publication and mention of the grant of the patent: **13.12.2000**
(21) Application number: 96929209.3
(22) Date of filing: 01.08.1996
(51) Int. Cl.: H04B 7/26

(54) **A WIRELESS MULTI-CELL RADIO TELECOMMUNICATION SYSTEM**
DRAHTLOSE MULTI-ZELLULARE FUNK-TELEKOMMUNIKATIONSANORDNUNG
SYSTEME DE RADIOCOMMUNICATIONS SANS FIL A CELLULES MULTIPLES

(30) Priority: 03.08.1995 EP 95202124
(43) Date of publication of application: 20.05.1998
(73) Proprietor: TELEFONAKTIEBOLAGET LM ERICSSON, 126 25 Stockholm (SE)
(72) Inventor: AKERBERG, Dag, E:son, S-196 31 Kungsängen (SE); VAN DE BERG, Petrus, Hubertus, Gerardus, NL-1015 BK Amsterdam (NL)
(74) Representative: Fieret, Johannes, Ir.
(86) International application number: EP9603460
(87) International publication number: WO9706611

(56) References cited:
- EP-A- 0 406 905
- EP-A- 0 637 144
- WO-A-93/06684
- WO-A-93/15565
- 1994 THIRD ANNUAL INTERNATIONAL CONFERENCE ON UNIVERSAL PERSONAL COMMUNICATIONS, September 1994, SAN DIEGO, US, pages 656-660, XP000603920 L.BONZANO ET AL.: "A New Radio Access Strategy Using a Repeater in the DECT Radio Local Loop Application"
- 1994 IEEE 44TH VEHICULAR TECHNOLOGY CONFERENCE, vol. 2, June 1994, STOCKHOLM SE;, pages 1069-1072, XP000496841 F.BROUWER ET AL.: "DECT Technology for Radio in the Local Loop"

## Description

### Field of the Invention

The present invention relates generally to radio telecommunication systems and, more specifically, to multi-cell radio telecommunication systems for communication between two or more telecommunication units, at least one of which can be mobile.

### Background of the Invention

In recent years various techniques and concepts of private and public radio telecommunication systems for telephony and data transmission have been developed. In general two types of radio telecommunication systems can be distinguished.

The first is cellular communication, providing coverage over a relatively wide area, i.e. relatively large cells. Analogue cellular systems, such as designated AMPS, ETACS, NMT-450 and NMT-900 have been deployed throughout the world. Digital cellular systems are designated IS-54B in North America and the pan-European GSM system.

The second is cordless communication, ranging from simple single-cell residential cordless telephones to multi-cell business cordless systems capable of serving hundreds or even thousands of cordless communication units across (large) offices, production halls etc. Analogue cordless telephones are designated CT0, CT1 and CT1+. Amongst the digital cordless systems, designated CT2, CT2-CAI, CT3 and DECT (Digital Enhanced Cordless Telecommunications), both CT3 and DECT use TDMA (Time Division Multiple Access) as their transmission technique, whereas CT2 operates under FDMA (Frequency Division Multiple Access). Besides these access techniques, in particular in North America, spread spectrum access is used for cordless communication. CDMA (Code Division Multiple Access) is another digital access technique which can be used for cordless communication.

Some of the cordless technologies can also be used to provide a type of Personal Communication Services (PCS) or also called Cordless Terminal Mobility (CTM). This is basically a multi-cell radio telephone like service that covers a whole town or city. Customers of this service are able to carry their mobile telecommunication units (telephone handsets) with them and can make calls in the coverage area of the service.

Within the public domain, there is a growing interest in replacing the wired local loop of the conventional Public Switch Telephone Networks (PSTN) and also the Integrated Services Digital Networks (ISDN) wired telephone systems by a so-called wireless local loop, i.e. using radio technology as an alternative for or as a replacement of the copper wires down to the subscriber premises. Within this concept of Radio in the Local Loop (RLL) two basic systems can be distinguished: Fixed RLL (FRLL) and Mobile RLL (MRLL). In the FRLL system, the subscriber is provided with an ordinary telephone socket, however connected to a radio transceiver, also called Fixed Access Unit (FAU) or Wireless Fixed Access Unit (WFAU). Via this FAU/WFAU a radio link is established with a so-called radio access unit, which provides access to the PSTN/ISDN. In the MRLL concept, the subscriber is provided with a portable cordless or mobile radio telephone handset, by which, via the radio access unit, direct access to the PSTN/ISDN can be established.

Mixed concepts are also possible, i.e. FRLL providing mobility in the subscriber premises, also called Cordless In The Home (CITH) and residential or neighbourhood mobility, also called Cordless In The Neighbourhood (CITN). In some countries, governmental regulations prevent the established telephone operators from offering local mobility in the present PSTN/ISDN. In such cases, it is very advantageous for a second or third operator to offer both fixed and mobile or cordless access to the PSTN/ISDN. The radio access units of an RLL system are arranged to provide a local multi-cell radio telecommunication environment.

Conventional multi-cell radio telecommunication systems consist typically of a plurality of radio access units generally called base stations (BS) each providing service to a geographical area or cell, and central control units, also called radio exchanges (RE) or mobile telephone switching offices (MTSO), to which a number of base stations are connected. The MTSO and/or RE are in turn coupled to a PSTN/ISDN for completing transmissions, such as telephone calls, between cordless or mobile radio subscribers and landline subscribers.

In a multi-cell radio telecommunication system the total capacity of the system is specified in terms of the area covered by all the base stations together and the communication or call/ data processing capabilities of the combination of the central control unit and the base stations.

From a system functionalities point of view, the multi-cell radio system is comprised of a central processing functionality implemented in the central control unit and distributed functionalities in the several base stations. Interface functions are required both at the central control unit and the base stations to support the connection between the central control unit and the base stations.

A multi-cell cordless radio system of this type is disclosed by EP-A-0 637 144. The base stations, called Radio Fixed Part (RFP), connect to a battery of transcoders (TRAS) which transcoders connect to the PSTN through a Central Control Fixed Part (CCFP), via link lines L by means of Drop/Insert (DI) means.

In order to extend the range of a base station or to improve the link quality between a base station and a remote radio telecommunication terminal, called Portable Part (PP), repeater devices are disclosed, indicated by RIP. The repeater devices are operative at the radio air interface between a base station and a remote radio telecommunication terminal, using the same type of radio air interface and communication protocol, on the one hand, between the repeater device and the radio base station and, on the other hand, between the repeater device and the remote radio telecommunication terminal. The type of radio air interface and communication protocol disclosed is DECT.

In the known multi-cell radio telecommunication systems, the base stations are connected to the central control unit, i.e. the RE or MTSO, via copper wire cables, optical fibre cables or special purpose radio links, using proprietary or standardised interfaces and communication protocols, such as is the case of the pan-European GSM system.

For the air interface or radio link between the base stations and the remote radio telecommunication terminals such as the radio telephone handsets, interface protocols are used which are defined by the particular radio system such as DECT or GSM, for example.

### Summary of the Invention

In view of the foregoing background, it is an object of the invention to provide a wireless multi-cell radio telecommunication system eliminating the need for special interface protocols (proprietary and/or standardised) to support the base stations.

It is in particular an object of the present invention to provide a true wireless multi-cell radio telecommunication system eliminating the need for cables, connectors etc. between the central control unit and the base stations and which provides easy installation.

These and other objects, advantages and features of the present invention are provided by a wireless multi-cell radio telecommunication system, comprising a plurality of remote radio telecommunication terminals which connect through a radio air interface and communication protocol with a plurality of radio base stations, which radio base stations each provide radio communication service to a given area, called a cell, and connect to a central control unit, in use the central control unit connects to a communication switching network, such as a Public Switched Telephone Network (PSTN) or a Private Branch eXchange (PBX), characterized in that the connection between the base stations and the central control unit is established using the same type of radio air interface and communication protocol provided for the connections between the remote radio telecommunication terminals and the radio base stations, wherein the central control unit is provided with interface functionality of a radio base station and wherein the radio base stations are designed as a repeater or relay station.

The invention is based on the insight that optimization as to cost-effectiveness, flexibility and ease of installation can be achieved through using as much as possible the same interface and communication protocols between the several parts of a radio telecommunication system.

This is achieved, on the one hand, by adding to the central control unit appropriate interface functionalities of a radio base station, i.e. integration of interface functionalities and the central processing functionality of the central control unit, while on the other hand providing the base stations with a repeater functionality, such to transfer the data received from the central control unit in the same format to the remote radio telecommunication terminal in the coverage area, i.e. the cell of that base station.

With the present invention, the connection between the base stations and the central control unit can be provided as a radio connection, thereby eliminating the need for cables, their installation costs etc. At the same time, a central control unit provided with additional radio base station functionality can act itself as a radio base station, providing radio coverage in a particular cell.

The multi-cell radio telecommunication system according to the invention essentially reuses in an efficient and advantageous manner the radio interface that is used between the base stations and the remote terminals, thereby omitting the need for special connections, interfaces or other connection media.

The invention also relates to a central control unit for use in a multi-cell radio telecommunication system as disclosed above, having first interface means for connection to a communication switching network such as a Private Branch eXchange (PBX) or a Public Switched Telephone Network (PSTN), characterized by common second air interface means for connection to at least on radio base station and/or remote telecommunication terminal.

In a preferred embodiment of the invention, the second interface is designed in accordance with the radio air interface between a base station and a remote radio telecommunication terminal according to the DECT standard.

The above-mentioned and other features and advantageous of the invention are illustrated in the following description with reference to the enclosed drawings.

### Brief Description of the Drawings

Fig. 1 shows, in a very schematic manner, a typical prior art multi-cell radio telecommunication system.

Fig. 2 shows, in a very schematic manner, a multi-cell radio telecommunication system according to the present invention.

### Detailed Description of the Embodiments

Without the intention of a limitation, the invention will now be explained through a multi-cell radio telecommunication system operating according to the DECT (Digital Enhanced Cordless Telecommunications) standard.

DECT is the mandatory European standard for all digital cordless telecommunication systems, i.e. for use in business environments such as offices and in residential areas for providing a type of Personal Communication Service (PCS) as well as making over radio the final link or local loop between the subscribers and the local telephone network, also called Radio in the Local Loop (RLL). See also International Patent Application WO 94/19877, which application is herein included by reference.

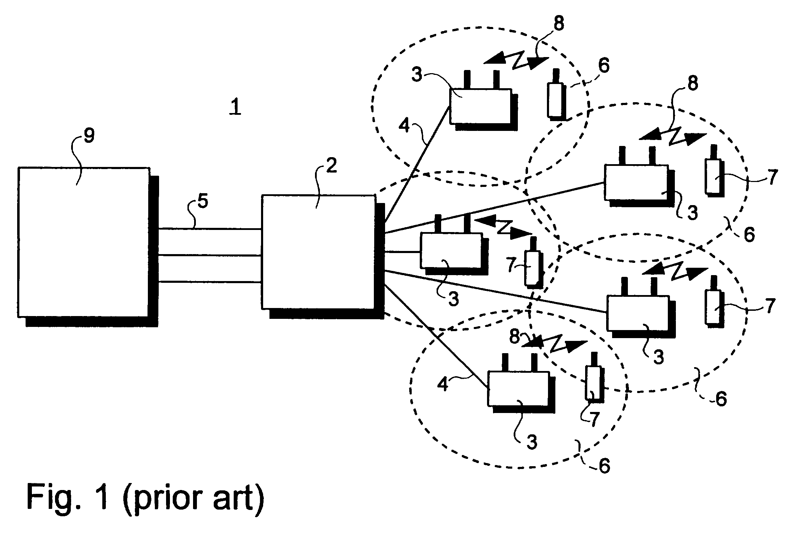

Fig. 1 illustrates a typical DECT multi-cell radio telecommunication system, generally designated with reference numeral 1. The system comprises three essential elements: a radio exchange (RE) or central control unit 2, a plurality of compact radio base stations 3, which are installed throughout the area to be covered and connect directly to the central control unit 2 through cables 4 and remote cordless or wireless portable telephones or handsets 7 which connect over a radio link 8 to the base stations 3. Each base station 3 provides service to a given area, called a cell 6, which is surrounded and/or overlapped by other cells 6 of other base stations 3, i.e. a so-called multi-cell approach. The radius of indoor cells amount typically from 10m - 100m, whereas the radius of outdoor cells typically range from 200m up to 5000m.

Generally, each base station 3 and portable 7 comprise air interface means in the form of a transceiver unit, having a transmitter/modulator part and a receiver/demodulator part, both connected to at least one receive/transmit antenna. Further, transmission control and synchronization units are provided for establishing correct radio link transmissions. Received and transmitted speech information is processed under the control of a speech processing unit, to which one or several codecs are connected. In the portable 7 these codecs connect to a microphone and loudspeaker part at the user interface of the portable. Each base station 3 and portable 7 are provided with central processing means for controlling the overall operation of the base station or portable.

The central control unit radio exchange 2 is connected to a wired exchange 9 via lines 5. In business environments, this exchange 9 is generally a so-called Private Branch Exchange (PBX) whereas in outdoor applications such as RLL, the exchange 9 is generally a Local Exchange (LE) which, like the PBX, is connected to a Public Switched Telephone Network (PSTN), i.e. the ordinary wired public telephone network.

In RLL applications, the base stations 3 may also communicate with so-called remote (Wireless) Fixed Access Units ((W)FAU) which, like the portables 7, comprise an air interface, transmission and control units, central processing means and a speech processing unit. In fixed RLL, for example, the (W)FAU connects to a fixed telephone terminal or socket for the connection of an ordinary wired telephone.

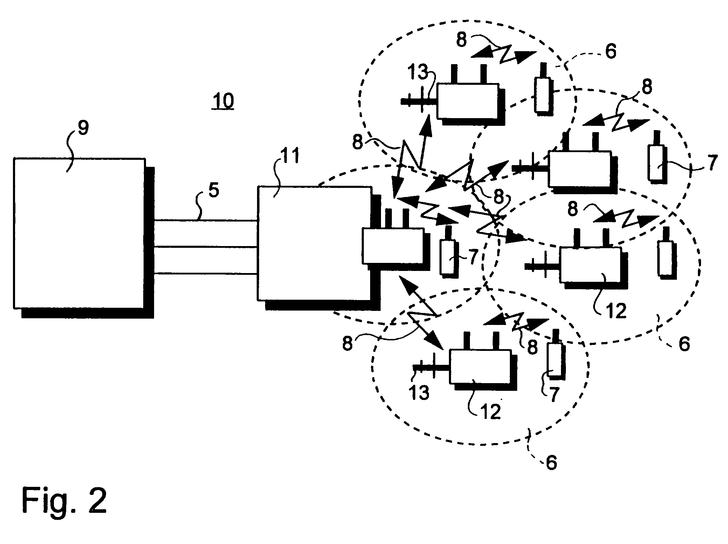

Fig. 2 illustrates a wireless multi-cell radio telecommunication system according to the present invention, generally designated with reference numeral 10. As illustrated, the central control unit 2 of Fig. 1 is provided with the functionality of a radio base station 3, constituting a new unit 11, whereas the base stations 3 (Fig. 1) of a cell 6 are replaced by repeater or relay stations 12, having interface means 13 for connection to the unit 11. As illustrated, this connection takes the form of a radio link 8 following the same interface and protocol requirements as between the remote radio telecommunication terminals 7 and the relay stations 12; i.e. in accordance with the DECT standard.

In the embodiment shown, the unit 11 acts at the same time as a base-station having its own coverage cell 6.

The principle of wireless repeater or relay stations is described in International Patent Application WO 94/19877.

Although the present invention has been described with reference to a DECT telecommunication system, it will be understood that the novel arrangement according to the present invention can be used more generally in other cordless telecommunication systems, both indoor and outdoor, and the digital mobile cellular systems.

## Claims

1. A wireless multi-cell radio telecommunication system (10), comprising a plurality of remote radio telecommunication terminals (7) which connect through a radio air interface and communication protocol (8) with a plurality of radio base stations (12), which radio base stations (12) each provide radio communication service to a given area, called a cell (6), and connect to a central control unit (11), in use the central control unit (11) connects to a communication switching network (9), such as a Public Switched Telephone Network (PSTN) or a Private Branch eXchange (PBX), characterized in that the connection between the base stations (12) and the central control unit (11) is established using the same type of radio air interface and communication protocol (8) provided for the connections between the remote radio telecommunication terminals (7) and the radio base stations (12), wherein the central control unit (11) is provided with interface functionality of a radio base station (12) and wherein the radio base stations (12) are designed as a repeater or relay station.

2. A radio telecommunication system (10) according to claim 1, wherein the central control unit (11) is provided with additional radio base station functionality such to provide radio communication service in a particular cell (6).

3. A radio telecommunication system (10) according to claim 1 or 2, wherein the radio air interface and communication protocol operates in accordance with the Digital Enhanced Cordless Telecommunications (DECT) standard.

4. A central control unit (9) for use in a multi-cell radio telecommunication system (10) according to claim 1, 2 or 3, having first interface means (5) for connection to a communication switching network (9) such as a Private Branch eXchange (PBX) or a Public Switched Telephone Network (PSTN), characterized by common second air interface means for connection to at least on radio base station (12) and/or remote telecommunication terminal (7).

5. A central control unit (9) according to claim 4, wherein the second radio air interface is designed in accordance with the radio air interface between a base station (12) and a remote radio telecommunication terminal (7) following the Digital Enhanced Cordless Telecommunication (DECT) standard.

## Patentansprüche

1. Ein drahtloses Mehrzellen-Funktelekommunikationssystem (10), umfassend eine Vielzahl von entfernt angeordneten Funktelekommunikationsterminals (7), die über eine Funkluftschnittstelle und ein Kommunikationsprotokoll (8) mit einer Vielzahl von Funkbasisstationen (12) in Verbindung stehen, wobei die Funkbasisstationenen (12) jeweils einen Funkkommunkationsdienst für ein gegebenes Gebiet, das als Zelle (6) bezeichnet wird, bereitstellen und in Verbindung mit einer zentralen Steuereinheit (11) stehen, und bei einer Verwendung die zentrale Steuereinheit (11) eine Verbindung mit einem Kommunikationsvermittlungsnetz (9), wie einem öffentlichen Telefonvermittlungsnetz (PSTN) oder einer privaten Nebenstellenanlage (PBX), herstellt,
dadurch gekennzeichnet,
daß die Verbindung zwischen den Basistationen (12) und der zentralen Steuereinheit (11) unter Verwendung des gleichen Typs von Funkluftschnittstelle und Kommunikationsprotokoll (8) hergestellt wird, die für die Verbindungen zwischen dem entfernt angeordneten Funkkommunikationsterminal (7) und den Funktbasisstationen (12) vorgesehen sind, wobei die zentrale Steuereinheit (11) mit einer Schnittstellenfunktionalität einer Funkbasisstation (12) versehen ist und wobei die Funkbasisstationen (12) als ein Zwischenverstärker (Repeater) oder eine Relaisstation ausgelegt sind.

2. Ein Funktelekommunikationssystem (10) nach Anspruch 1
dadurch gekennzeichnet, daß die zentrale Steuereinheit (11) mit einer zusätzlichen Funkbasisstationsfunktionalität versehen ist, um so einen Funkkommunikationsdienst in einer bestimmten Zelle (6) bereitzustellen.

3. Ein Funktelekommunikationssystem (10) nach Anspruch 1 oder 2,
dadurch gekennzeichnet
daß die Funkschnittstelle und das Kommunikationsprotokoll gemäß dem digitalen verbesserten kabellosen Telekommunikations-(Digital Enhanced Cordless Telecommunications DECT)-Standard arbeiten.

4. Eine zentrale Steuereinheit (9) zur Verwendung in einem Mehrzellen-Funktelekommunikationssystem (10) nach Anspruch 1, 2 oder 3, mit einer ersten Schnittstelleneinrichtung (5) für eine Verbindung zu einem Kommunikationsvermittlungsnetz (9), wie einer privaten Nebenstellenanlage (PBX) oder einem öffentlichen Telefonvermittlungsnetz (PSTN),
gekennzeichnet durch eine gemeinsame zweite Luftschnittstelleneinrichtung für eine Verbindung zu wenigstens einer Funkbasisstation (12) und/oder einem entfernt angeordneten Telekommunikationsterminal (7).

5. Eine zentrale Steuereinheit (9) nach Anspruch 4, dadurch gekennzeichnet, daß die zweite Funkluftschnittstelle gemäß der Funkluftschnittstelle zwischen einer Basisstation (12) und einem entfernt angeordneten Telekommunikationsterminal (7) dem digitalen verbesserten kabellosen Telekommunikations (Digital Enhanced Cordless Telecommunication DECT)-Standard folgend ausgelegt ist.

## Revendications

1. Système (10) de télécommunication radio sans fil à cellules multiples, comportant plusieurs terminaux éloignés (7) de télécommunication radio qui sont connectés par un protocole (8) de communication et d'interface radio dans l'air à plusieurs stations radio de base (12), lesquelles stations radio de base (12) fournissent chacune un service de communication radio à une zone donnée, appelée une cellule (6), et sont connectées à une unité de commande centrale (11), lors de l'utilisation, l'unité de commande centrale (11) est connectée à un réseau de commutation de communication (9), tel qu'un réseau téléphonique public commuté (PSTN) ou un central d'abonnés (PBX), caractérisé en ce que la connexion entre les stations de base (12) et l'unité de commande centrale (11) est établie par l'utilisation d'un type de protocole de communication et d'interface radio dans l'air (8) prévu pour les connexions entre les terminaux éloignés (7) de télécommunication radio et les stations radio de base (12), dans lequel l'unité de commande centrale (11) est pourvue d'une capacité de fonction d'interface d'une station radio de base (12) et dans lequel les stations radio de base (12) sont conçues en tant que stations répéteurs ou relais.

2. Système de télécommunication radio (10) selon la revendication 1, dans lequel l'unité de commande centrale (11) est pourvue d'une capacité supplémentaire de fonction de station radio de base afin d'établir un service de communication radio dans une cellule particulière (6).

3. Système de télécommunication radio (10) selon la revendication 1 ou 2, dans lequel le protocole de communication et d'interface radio dans l'air fonctionne conformément à la norme des télécommunications sans fil à amplification numérique (DECT).

4. Unité de commande centrale (9) utilisée dans un système (10) de télécommunication radio à cellules multiples selon la revendication 1, 2 ou 3, ayant un premier moyen d'interface (5) pour une connexion sur un réseau (9) de commutation de communication tel qu'un central d'abonnés (PBX) ou un réseau téléphonique public commuté (PSTN), caractérisée par un second moyen commun d'interface dans l'air pour une connexion sur au moins une station radio de base (12) et/ou un terminal éloigné (7) de télécommunication.

5. Unité de commande centrale (9) selon la revendication 4, dans laquelle la seconde interface radio dans l'air est conçue conformément à l'interface radio dans l'air entre une station de base (12) et un terminal éloigné (7) de télécommunication radio en suivant la norme de télécommunication sans fil à amplification numérique (DECT).
